# EUROPÄISCHE PATENTSCHRIFT

(11) **EP 0 515 006 B1**
(45) Veröffentlichungstag und Bekanntmachung des Hinweises auf die Patenterteilung: **08.03.1995**
(21) Anmeldenummer: 92250098.8
(22) Anmeldetag: 28.04.1992
(51) Int. Cl.: F04D 29/36, F16B 21/18, F03D 1/06, F01D 5/30

(54) **Vorrichtung zur Befestigung eines Schaftes am Umfang eines Rotationskörpers**
Coupling device for a shank on the periphery of a rotating body
Elément d'assemblage d'une tige à la périphérie d'un corps de rotation

(30) Priorität: 21.05.1991 DE 4116907
(43) Veröffentlichungstag der Anmeldung: 25.11.1992
(73) Patentinhaber: SIEMENS AKTIENGESELLSCHAFT, 80333 München (DE)
(72) Erfinder: Vandamme, Detlef, W-14052 Berlin (DE); Zwarg, Günter, W-1000 Berlin 19 (DE)

(56) Entgegenhaltungen:
- FR-A- 2 246 758
- GB-A- 2 191 249
- US-A- 3 401 436
- US-A- 3 428 244

## Beschreibung

Die Erfindung bezieht sich auf eine Vorrichtung bestehend aus einem Rotationskörper und einem zylindrischen Schaft, wobei der zylindrische Schaft, insbesondere der eines Lüfterflügels, in einer Ausnehmung am Umfang des Rotationskörpers besfestigt ist und bei der der Schaft eine umlaufende Innennut und die Ausnehmung eine umlaufende Außennut aufweist, die im eingesteckten Zustand des Schaftes im wesentlichen fluchten und gemeinsam eine geschlitzte Sicherungsscheibe aufnehmen.

Oft müssen an Rotationskörpern Bauteile befestigt werden, die dann im Betrieb großen Zentrifugalkräften ausgesetzt sind. Dieses Problem tritt insbesondere bei Schaufeln von Turbinen, bei Lüfterflügeln in eigengekühlten Motoren, Generatoren, Gaspumpen und Ventilatoren auf.

Oft sind die Anstellwinkel von Flügeln und Turbopropellern im Betrieb verstellbar. Bei vielen Maschinen ist eine solche Verstellung dagegen nicht notwendig. Bei Maschinenreihen mit gleichem Konstruktionsprinzip und unterschiedlichen Einsatzmöglichkeiten, wobei jede einzelne Maschine allerdings bei im wesentlichen konstanten Bedingungen betrieben werden soll, ist eine Verstellung der Lüfterflügel im Betrieb nicht notwenig. Die Lüfterflügel werden vielmehr einmal bei der Inbetriebnahme in ihrem Anstellwinkel auf den vorgesehenen Betriebsfall eingestellt.

Für diesen Anwendungsfall sind viele der bekannten Befestigungsvorrichtungen für Lüfterflügel nicht geeignet. Insbesondere die bekannte Möglichkeit, Lüfterflügelschäfte in am Umfang einer Welle eingebrachte Gewindebohrungen einzuschrauben, schafft Probleme, da durch eine Anpassung des Anstellwinkels der Lüfterflügel wegen der Gewindesteigung der Abschluß der Flügelunterkanten an der Welle unter Umständen verschlechtert wird. Außerdem ist durch die Notwendigkeit des Einschraubens der Lüfterflügel die Überdeckung der einzelnen Lüfterflügel mit ihren Nachbarn begrenzt.

Aus der US-Patentschrift 3,428,244 ist eine Vorrichtung der eingangs genannten Art zur Befestigung eines Lüfterflügels am Umfang einer Welle im wesentlichen bekannt.

Der vorliegenden Erfindung liegt die Aufgabe zugrunde, eine derartige Befestigungsvorrichtung so zu gestalten, daß sie bei konstruktiver Einfachheit große Fliehkräfte, die bei hohen Drehzahlen auftreten, ohne Beschädigung der Lüfterflügel aufnimmt.

Die Aufgabe wird erfindungsgemäß dadurch gelöst, daß der Schaft und gegebenenfalls der Lüfterflügel aus einem Kunststoff mit in Längsrichtung des Schaftes verlaufenden Verstärkungen in Form von Verstärkungsfasern oder Geweben besteht und daß der Schaft im Bereich der Innennut einen hohlzylindrischen, die Innennut enthaltenden Metalleinsatz aufweist.

Der Schaft weist eine umlaufende Innennut auf, in die die Sicherungsscheibe eindrückbar ist. Der Schaft ist im Durchmesser so bemessen, daß er mit der in die Nut federnd eingedrückten Sicherungsscheibe in die Ausnehmung um Umfang des Rotationskörpers eingeführt werden kann. Wenn der Schaft soweit in die Ausnehmung eingeführt ist, daß die Innennut am Schaft mit der Außennut in der Ausnehmung einen zusammenhängenden ringförmigen Hohlraum bildet, springt die Sicherungsscheibe durch ihre Eigenelastizität radial nach außen auf und greift dann zur Verriegelung des Schaftes in der Ausnehmung teilweise in die Innennut, teilweise in die Außennut ein. Somit werden die bei der Rotation am Schaft auftretenden Zentrifugalkräfte von der Wand der Innennut im Schaft über die Sicherungsscheibe auf die Wand der Außennut in der Ausnehmung durch Scherkräfte übertragen. Dabei ist der Schaft im Stillstand des Rotationskörpers problemlos um seine Längsachse drehbar, so daß ein Lüfterflügel, der am Schaft befestigt ist, in seinem Anstellwinkel stufenlos einstellbar ist. Es ergibt sich auch keine axiale Bewegung des Schaftes bei einer Änderung des Anstellwinkels, wie z. B. bei einer Gewindebefestigung. Dadurch kann die Flügelunterkante eines Lüfterflügels sehr dicht mit der Oberfläche des Rotationskörpers abschließen, um einen hohen Wirkungsgrad des Lüfters zu gewährleisten. Mit steigender Drehzahl und damit steigenden Zentrifugalkräften wird der Schaft in der Ausnehmung durch Reibschluß über die Sicherungsscheibe unverdrehbar fixiert. Dadurch ist bei höheren Drehzahlen keine selbsttätige Verstellung der Lüfterflügel zu befürchten.

Es ist, falls erwünscht, eine hohe Überdeckung der benachbarten Lüfterflügel am Umfang des Rotationskörpers möglich, da die einzelnen Lüfterflügel beim Einstecken in die Ausnehmungen nicht gedreht werden müssen.

Insbesondere bei hohen mechanischen Belastungen, beispielsweise bei sehr hohen Drehzahlen und hohen Beschleunigungen, denen der Schaft im Betrieb ausgesetzt ist, ist es vorteilhaft, daß der Schaft und gegebenenfalls der Lüfterflügel aus einem Kunststoff mit in Längsrichtung des Schaftes verlaufenden Verstärkungen in Form von Verstärkungsfasern oder Geweben besteht. Durch eine solche Beschaffenheit des Schaftes und des Lüfterflügels aus einem Verbundwerkstoff ist eine hohe mechanische Stabilität mit geringer Masse verbunden. Die Ausrichtung der Verstärkungen in Längsrichtung des Schaftes gewährleistet eine gute Tragfähigkeit des Verbundwerkstoffes in bezug auf die Zentrifugalkräfte.

Zur besseren Kraftübertragung zwischen dem Schaft und der Ausnehmung ist es vorgesehen, daß der Schaft im Bereich der Außennut einen hohlzylindrischen, die Innennut enthaltenden Metalleinsatz aufweist.

Der Metalleinsatz gewährleistet eine gute Verteilung der über die Sicherungsscheibe übertragenen Kraft auf den Schaft.

Die Erfindung wird vorteilhaft dadurch ausgestaltet, daß zwischen dem Boden der Ausnehmung und dem Schaft eine gespannte Feder vorgesehen ist.

Die Feder kann beispielsweise eine Tellerfeder sein, gegen die das Ende des Schaftes beim Einführen in die Ausnehmung gedrückt wird.

Diese Feder gewährleistet, daß auch im Stillstand des Rotationskörpers der Schaft in derselben Stellung durch die Federkraft fixiert ist, wie im Betrieb durch die Zentrifugalkräfte. Die einzelnen Lüfterflügel sind im Stillstand noch leicht drehbar, so daß der Anstellwinkel eingestellt werden kann. Durch die Feder ist aber eine selbsttätige Verstellung der Lüfterflügel ausgeschlossen.

Besonders stabil wird die Verbindung zwischen dem Schaft und dem Metalleinsatz dann, wenn der Schaft als Gußteil an den Metalleinsatz angegossen ist.

Zur besseren Kraftübertragung zwischen dem Metalleinsatz und dem Schaft ist es vorgesehen, daß der Metalleinsatz an seinen Stirnflächen im Bereich seiner inneren Mantelfläche umlaufende Abschrägungen aufweist.

Beim Gießen des Schaftes werden die Verstärkungsfasern bzw. die Gewebestücke durch die Durchgangsöffnung des Metalleinsatzes geführt. Durch die Abschrägung des Metalleinsatzes können die Verstärkungsfasern oder das Verstärkungsgewebe besonders gut auch in der Nähe des Metalleinsatzes über das gesamte Volumen des Schaftes verteilt werden. Dadurch ergibt sich eine wirksame Verstärkung des Schaftes auch in dem Bereich, der dem Metalleinsatz benachbart ist und der die Kraftübertragung zwischen dem Metalleinsatz und den übrigen Bereichen des Schaftes gewährleistet.

Um die Austauschbarkeit der Schäfte bzw. Lüfterflügel zu gewährleisten, ist vorgesehen, daß die Sicherungsscheibe zwei an ihrem Umfang radial vorstehende Manipulationslaschen aufweist und daß in der Wand der Ausnehmung eine Längsnut zur Führung der Manipulationslaschen beim Einführen oder Ausbau des Schaftes in die Ausnehmung vorgesehen ist.

Die Manipulationslaschen ermöglichen ein Eindrücken der Sicherungsscheibe in die Innennut auch bei in die Ausnehmung eingesetztem Schaft. Mit einem Spezialwerkzeug werden die Manipulationslaschen betätigt, so daß die Sicherungsscheibe in die Innennut eingedrückt wird. Daraufhin kann der Schaft aus der Ausnehmung gezogen werden, wobei die Manipulationslaschen in der Längsnut in der Wand der Ausnehmung geführt sind.

In dem Fall, daß der Rotationskörper eine zylindrische Welle ist, sieht eine vorteilhafte Ausgestaltung der Erfindung vor, daß an der Mantelfläche der Welle plane Flächen zur Auflage von geraden Flügelunterkanten angearbeitet sind.

Diese planen Flächen gewährleisten einen dichten Abschluß zwischen den Flügelunterkanten der Lüfterflügel und der Oberfläche der Welle. Dadurch wird ein besonders hoher Lüfterwirkungsgrad erzielt.

Die Flügelunterkante kann jeweils noch mit der Mantelfläche der Welle verklebt sein.

Im folgenden wird die Erfindung anhand eines Ausführungsbeispiels in einer Zeichnung gezeigt und anschließend beschrieben.

Dabei zeigt
Figur 1 einen Schaft in einer Ausnehmung im Längsschnitt,
Figur 2 die Vorrichtung aus Figur 1 in einer Draufsicht,
Figur 3 eine Sicherungsscheibe.

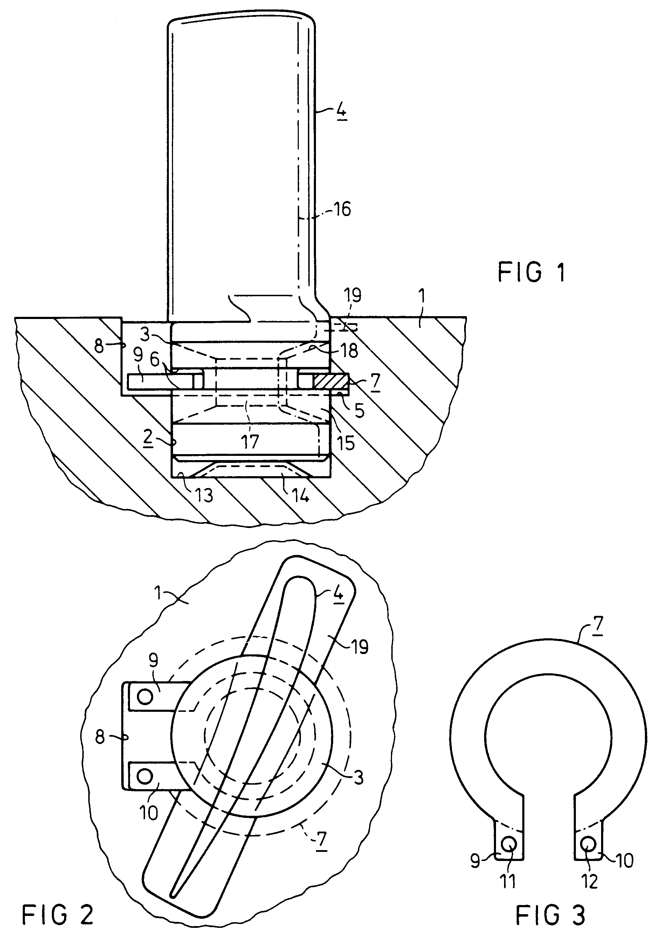

Figur 1 zeigt eine Welle 1 mit einer Ausnehmung 2, in die ein zylindrischer Schaft 3 eines Lüfterflügels 4 eingesteckt ist. Die Ausnehmung 2 ist als zylindrische Bohrung ausgeführt und so bemessen, daß der Schaft 3 des Lüfterflügels 4 genau hineinpaßt. Die Ausnehmung 2 in der Welle 1 weist eine umlaufende Außennut 5 und der Schaft 3 des Lüfterflügels 4 eine umlaufende Innennut 6 auf. Es ist eine geschlitzte Sicherungsscheibe 7 vorgesehen, die in entspannter Lage teilweise in die Außennut 5, teilweise in die Innennut 6 eingreift und somit eine formschlüssige Verriegelung in Axialrichtung für den Schaft 3 in der Ausnehmung 2 bildet. Die Zentrifugalkräfte, die während der Rotation der Welle 1 auftreten, werden über Scherkräfte durch die Sicherungsscheibe 7 vom Schaft 3 auf die Wände der Außennut 5 in der Ausnehmung 2 übertragen.

In der Ausnehmung 2 ist außer der Außennut 5 eine Längsnut 8 vorgesehen. Die Sicherungsscheibe 7 weist zwei Manipulationslaschen 9, 10 auf, die beim Einführen des Schaftes 3 in die Ausnehmung 2 sowie beim Herausziehen des Schaftes 3 aus der Ausnehmung 2 in der Längsnut 8 geführt werden. Die Manipulationslaschen 9, 10 weisen jeweils eine Durchgangsbohrung 11, 12 zum Angreifen eines Spezialwerkzeuges auf. Dadurch kann mittels des Spezialwerkzeuges die Sicherungsscheibe 7 vom Umfang der Welle her soweit zusammengedrückt werden, daß sie in der Innennut 6 des Schaftes 3 vollkommen verschwindet, so daß der Schaft 3 aus der Ausnehmung 2 herausgezogen werden kann, um den Lüfterflügel 4 auszutauschen. Zwischen dem Boden 13 der Ausnehmung 2 und dem dem Boden der Ausnehmung 2 zugewandten Ende des Schaftes 3 ist eine Tellerfeder 14 vorgesehen, die den Schaft 3 auch im Stillstand der Welle 1 in seiner Sollposition fixiert.

Im Bereich der Innennut 6 weist der Schaft 3 der Welle 1 einen hohlzylindrischen Metalleinsatz 15 auf. Dieser ist bei der Herstellung des Schaftes 3 mit eingegossen. Der Lüfterflügel 4 weist zur Verstärkung in seiner Längsrichtung verlaufende Verstärkungsfasern 16 auf, von denen eine repräsentativ in der Figur 1 durch eine strichlierte Linie angedeutet ist. Die Verstärkungsfasern werden bei der Herstellung des Lüfterflügels 4 in die Gießform gelegt, durch die Durchgangsöffnung 17 des hohlzylindrischen Metalleinatzes 15 geführt und vergossen. Der Metalleinsatz 15 weist an seinen Stirnflächen im Bereich seiner Mantelfläche Abschrägungen 18 auf, an die sich die Verstärkungsfasern 16 anschmiegen. Dadurch durchsetzen die Verstärkungsfasern 16 auch die im Bereich der Stirnseite des Metalleinsatzes 15 gelegenen Bereiche des Schaftes 3. Damit ist eine gute Kraftverteilung auf die Verstärkungsfasern 16 innerhalb des Schaftes 3 gewährleistet.

An der Mantelfläche der Welle 1 sind plane Flächen 19 angeschliffen, auf denen die geraden Unterkanten der Lüfterflügel 4 aufliegen. Somit ist ein dichter Abschluß an der Flügelunterkante erreicht. Zusätzlich sind die Flügelunterkanten mit den planen Flächen 19 verklebt. Dadurch wird die Abdichtung und Fixierung an dieser Stelle weiter verbessert.

## Patentansprüche

1. Vorrichtung bestehend aus einem Rotationskörper und einem zylindrischen Schaft, wobei der zylindrische Schaft, insbesondere der eines Lüfterflügels, in einer Ausnehmung am Umfang des Rotationskörpers befestigt ist, und der Schaft (3) eine umlaufende Innennut (6) und die Ausnehmung (2) eine umlaufende Außennut (5) aufweist, die im eingesteckten Zustand des Schaftes im wesentlichen fluchten und gemeinsam eine geschlitzte Sicherungsscheibe (7) aufnehmen,
**dadurch gekennzeichnet,** daß der Schaft (3) und gegebenenfalls der Lüfterflügel (4) aus einem Kunststoff mit in Längsrichtung des Schaftes (3) verlaufenden Verstärkungen in Form von Verstärkungsfasern oder Geweben besteht und daß der Schaft (3) im Bereich der Innennut (6) einen hohlzylindrischen, die Innennut (6) enthaltenden Metalleinsatz (15) aufweist.

2. Vorrichtung nach Anspruch 1,
**dadurch gekennzeichnet,** daß zwischen dem Boden (13) der Ausnehmung (2) und dem Schaft (3) eine gespannte Feder (14) vorgesehen ist.

3. Vorrichtung nach Anspruch 1 oder 2,
**dadurch gekennzeichnet,** daß der Schaft (3) als Gußteil an den Metalleinsatz (15) angegossen ist.

4. Vorrichtung nach Anspruch 1 oder einem der folgenden,
**dadurch gekennzeichnet,** daß der Metalleinsatz (15) an seinen Stirnflächen im Bereich seiner inneren Mantelfläche umlaufende Abschrägungen (18) aufweist.

5. Vorrichtung nach Anspruch 1 oder einem der folgenden,
**dadurch gekennzeichnet,** daß die Sicherungsscheibe (7) zwei an ihrem Umfang radial vorstehende Manipulationslaschen (9, 10) aufweist und daß in der Wand der Ausnehmung (2) eine Längsnut (8) zur Führung der Manipulationslaschen (9, 10) beim Einführen oder Ausbau des Schaftes (3) vorgesehen ist.

6. Vorrichtung nach Anspruch 1 oder einem der folgenden,
**dadurch gekennzeichnet,** daß der Rotationskörper (1) eine zylindrische Welle ist und daß an der Mantelfläche der Welle (1) plane Flächen (19) zur Auflage von geraden Flügelunterkanten angearbeitet sind.

## Claims

1. A device comprising a rotating body and a cylindrical shank, the cylindrical shank, more particularly that of a fan blade, being secured in a recess on the periphery of the rotating body, the shank (3) comprising a circumferential inner groove (6) and the recess (2) comprising a circumferential outer groove (5), which in the inserted state of the shank are essentially flush with one another and together receive a common slotted securing disc (7), characterised in that the shank (3) and optionally the fan blade (4) are made of a plastics material with reinforcements in the form of reinforcing fibres or fabric pieces extending in the longitudinal direction of the shank (3), and in the region of the inner groove (6) the shank (3) comprises a hollow-cylindrical metal insert (15) comprising the inner groove (6).

2. A device according to claim 1, characterised in that a tensioned spring (14) is provided between the base (13) of the recess (2) and the shank (3).

3. A device according to claim 1 or 2, characterised in that the shank (3) is cast as a casting onto the metal insert (15).

4. A device according to claim 1 or one of the following, characterised in that, on its end faces in the region of its inner cylindrical surface, the metal insert (15) comprises circumferential bevelled sections (18).

5. A device according to claim 1 or one of the following, characterised in that the securing disc (7) comprises two radially projecting manipulation tongues (9, 10) on its circumference, and a longitudinal groove (8) is provided in the wall of the recess (2) for guiding the manipulation tongues (9, 10) during the introduction or removal of the shank (3).

6. A device according to claim 1 or one of the following, characterised in that the rotating body (1) is a cylindrical shaft and flat surfaces (19) are machined on the cylindrical surface of the shaft (1) for the abutment of straight lower blade edges.

## Revendications

1. Dispositif constitué d'un corps de révolution et d'une tige cylindrique, la tige cylindrique, notamment celle d'une pale de ventilateur, étant fixée dans un logement ménagé dans la périphérie du corps de révolution, et la tige (3) ayant une gorge intérieure périphérique (6) et le logement (6) ayant une gorge extérieure périphérique (5), ces gorges étant sensiblement alignées lorsque la tige est à l'état enfiché et logeant conjointement une rondelle de sécurité fendue (7),
caractérisé par le fait que la tige (3) et éventuellement la pale de ventilateur (4) sont en une matière plastique et ont des renforts qui s'étendent dans la direction longitudinale de la tige (3) et se présentent sous la forme de fibres de renfort ou de tissus, et la tige (3) possède, dans la zone de la gorge intérieure (6), un insert métallique cylindrique creux (15), qui contient la gorge intérieure (6).

2. Dispositif suivant la revendication 1, caractérisé par le fait qu'un ressort bandé (14) est prévu entre le fond (13) du logement (2) et la tige (3).

3. Dispositif suivant la revendication 1 ou 2, caractérisé par le fait que la tige (3) est réalisée sous la forme d'une pièce coulée sur l'insert métallique (15).

4. Dispositif suivant la revendication 1 ou l'une des suivantes, caractérisé par le fait que l'insert métallique (15) possède, sur ses faces frontales, des biseaux circonférentiels (18) dans sa surface enveloppe intérieure.

5. Dispositif suivant la revendication 1 ou l'une des suivantes, caractérisé par le fait que la rondelle de protection (7) comporte deux languettes de manipulation (9,10) qui font saillie radialement sur sa périphérie et une rainure longitudinale (8) servant à guider les languettes de manipulation (9,10) lors de l'insertion ou du démontage de la tige (3) est prévue dans la paroi du logement (2).

6. Dispositif suivant la revendication 1 ou l'une des suivantes, caractérisé par le fait que le corps de révolution (1) est un arbre cylindrique, et des faces planes (19) sont usinées sur la surface enveloppe de l'arbre (1), pour l'application de bords inférieurs rectilignes de pale.
